# EUROPEAN PATENT APPLICATION

(11) **EP 0 908 477 A1**
(43) Date of publication of application: **14.04.1999**
(21) Application number: 98118937.6
(22) Date of filing: 07.10.1998
(51) Int. Cl.: C08G 18/22, C09J 175/04

(54) **Static dissipative bonding material for multilayer fabrics**

(30) Priority: 09.10.1997 US 948311
(71) Applicant: NATIONAL STARCH AND CHEMICAL INVESTMENT HOLDING CORPORATION, Wilmington, Delaware 19850 (US)
(72) Inventor: Dust, Richard A., Manning Tree, Essex CO112TX (GB); Graham, Malcolm, Old Windsor, Berks SL 42QQ (GB)
(74) Representative: Held, Stephan, Dr.rer.nat., Dipl.-Chem.

(57) **Abstract**

A mono- or divalent anhydrous metal salt is complexed with a compatible polyether polyol and formulated in a static dissipative, 100% solids, reactive hot melt adhesive.

## Description

The present invention relates generally to the field of static dissipative materials for bonding multilayer structures that require flexibility in the bond, and long-term use.

The present invention is particularly useful to make 100% solids reactive hot melt adhesives for use in static dissipative floorings and fabrics. More specifically, a highly ionic anhydrous metal salt is complexed with a polyether polyol, and the complex is used to make a hot melt adhesive which, upon crosslinking, exhibits static dissipative properties.

Electrostatic discharge can be a source of annoyance and discomfort for human beings, and can also be a significant cause of failure of electronic equipment. Accordingly, static control measures are becoming increasingly viewed as essential in many different environments, including automobiles, mass transportation vehicles, and buildings. One strategy for avoiding the discharge of static electricity is to use materials that are static dissipative that is, materials wherein a surface charge may develop but will subsequently dissipate by leakage to the ground. These dissipative materials differ from anti-static materials which minimize, if not prevent, the generation of static electricity.

Materials may be classified as being conductive, dissipative, antistatic or insulating. A conductive material has a resistance of less that 10⁵ ohms and will discharge electrostatic electricity very quickly. This rate of discharge is fast enough to create a surge capable of damaging electrical components or causing electrical shocks to individuals. Dissipative materials have resistances between 10⁵ and 10⁸ ohms. They resist creating electrostatic charges and discharge any existing electrostatic charges to the ground slowly enough to avoid troublesome surges and electrical shocks. A material is considered anti-static if it has a resistance of 10⁸ to 10¹⁴ ohms. An object with this resistance does not create any static electricity and discharges static charges to the ground at a very slow rate. Materials that are insulators have resistances higher than 10¹⁴ ohms.

There is an increasing demand for static dissipative materials, particularly in environments where computerized equipment can be found, not only in business environments but also in automobiles and vehicles for mass transport such as trains and airplanes. Static dissipative floorings and multilayer fabrics are examples of materials which could be utilized to slowly allow any excess static electric discharge to disspate through, for example, the flooring to the grounding environment (for example, the earth). In addition to the substrate material, any adhesives used to make such floorings and fabrics should also be static dissipative.

Suitable adhesives for a given application must, in addition to having appropriate static dissipative properties, also possesses other qualities. The applications envisaged for the present invention require a strong bond which can cause surface rupture of the substrates, very little reduction in static dissipative properties over the lifetime of the product, preferably for at least five years, more preferably seven years, and still more preferably more than ten years, and bond integrity over the in service temperature range (preferably at least from -10°C to 70°C, more preferably -20°C to 90°C, and still more preferably from -40°C to +100°C). For example, an adhesive used to bond a multilayer fabric must be flexible, have good adhesion to two specific substrates, have good handling properties so that it can be readily applied to the substrates, and have an appropriate useable lifetime. Where the adhesive is used in flooring such as metal, or plastic to static dissipative chip board, it must retain its dissipative properties for periods of time measured in years, typically in a dry environment, despite any flexion that might occur in use. Further, it must retain its anti-static properties despite the temperature and humidity changes that may occur over the product lifetime In a variety of climates world-wide.

It is known to incorporate various additives such as graphite materials including carbon black, graphite fibers, carbon fibers, and nickel-coated carbon fibers, metals, such as fibers, flakes and powders made from stainless steel, aluminum, copper, silver and low melting point alloys, metal-coated inorganic materials such as aluminum coated glass fibers, silver-coated glass spheres and nickel-coated mica, and inorganic materials such as quaternary ammonium salts into adhesives to confer anti-static or static dissipative properties. Such materials tend to separate from the adhesive over the long term, so that the dissipative properties are lost.

Lithium perchlorate is known for use in adhesion gel pads for attaching conductive bioelectrodes to skin. However, this is a short term use (on the order of minutes) involving low molecular weight polyether-polyurethane adhesives with mild, repeatable adhesiveness to skin. See "Bioelectrodes Consisting of Ion-Conducting Polyurethane Adhesives "Shikinami and Tsuta, July 29, 1991. Conductive polymers are known, see European patent publication no. 0 253,595 A2, which relates to novel pyrrole homopolymers and copolymers. There is no discussion as to how or whether these materials would perform well in any adhesive, much less a hot melt adhesive. Conductive polymers tend to be very rigid, high melting materials, and as such usually require application in hazardous solvent, are very difficult to apply, and result in a product that is not flexible enough to make a good adhesive for the inventors pulses.

It is an object of the present invention to provide a method of making a static dissipative 100% solids reactive hot melt adhesive. A further object of this invention is to provide a hot melt adhesive which is particularly useful to make static dissipative fabrics. It is yet a further object of this invention to provide a fabric having improved utility as a car seat cover.

The present inventor has found that a salt having a highly ionic mono- or divalent metal cation can be blended into a polyether polyol that will dissolve the salt, to make a salt complex which can then further be formulated into a reactive hot melt adhesive. Such an adhesive may then be used to bond the layers of a multilayer fabric. An advantage of the present invention is that the layer of cured adhesive provides a leakage path for any static charge that may build up in the fabric, thereby avoiding harmful static discharge. Another advantage of the invention is that both solvent and fillers may be eliminated from the formulation. A further advantage of the invention is that, unlike a filler, the salt is fully incorporated into the formulation, so that static dissipative properties are long-lived. Yet another advantage of the invention is that the system does not rely on water vapor in the adhesive to assist dissipation. While it appears that absorbed water may increase conductance, it is possible that dissipation will occur in anhydrous conditions.

These and other objects and advantages of the present invention will become apparent through the text and examples herein.

### The Salt Complex

The salts useable in the invention are highly ionic mono- and divalent anhydrous metal salts such the lithium and sodium salts of anhydrous perchloric acid, including lithium perchlorate (Li ClO₄), and sodium perchlorate (Na ClO₄), as well as lithium trifluormethane sulphonate (Li CF₃SO₃), lithium bromide, and highly ionic anhydrous salts of various metals including but not limited to potassium and calcium. Of these, lithium perchlorate, sodium perchlorate, and lithium trifluormethane sulphonate are preferred.

A polyether salt complex can be formed when the highly ionic anhydrous salts are heated together with a polyether polyol, preferably a diol having the general structures formed from polymers or copolymers of HO(CH₂-CH₂-O)ₙ-H, HO(CH₂-CH₂-CH₂-CH₂-O)ₙH, HO(CH₂-CH₂(CH₃))ₙH. The salt complex can also be made by dissolving the polyol in solvent, then adding the salt. The complex is then recovered by evaporation of the solvent. For lithium salts, addition to the heated, dry polyol is the preferred approach. In the alternative, the salt can be added to a polyol-containing hot melt adhesive formulation after manufacture but before cure by heating and stirring.

Useable polyether polyols include polyethylene oxide polyols, polypropylene oxide polyols, polytetra-hydrofuran, and copolymers of these, with or without other monomers. Commercially available examples include PEG200 (polyethylene oxide, MW 200, PEG20,000 (polyethylene oxide, MW 20,000, Voranl™ EP1900 (polyethylene oxide tipped polypropylene oxide), MW 3800 available from Dow Chemical Co., Houston, Texas), Voranol™ P2000 (polypropylene oxide, MW 2000, available from Dow, and Acclaim™ DPP 12,200 (polypropyleneoxide, MW 12,200 available from Arco Chemical Co., Houston, Texas.

The concentration of metal ion in these complexes can be measured as the ratio of -(C-C-O)-, -(C-C(CH₃)-O)- or -(C-C-C-C-O)- units per metal ion. The theoretical maximum is 3:1, and the polyether and the salt are preferably combined in mole ratios of 15:1 to 75:1, more preferably about 30:1 to 60:1, and even more preferably about 40:1 to 55:1. Generally speaking, the preferred metal content is dependent in part on the flexibility of the basic adhesive formula. A harder product might require a higher metal content, while a very flexible adhesive might require a lower metal content to keep the conductivity in the dissipative range.

The polyether salt complex is added to the polyol portion of a formulation for a polyurethane reactive hot melt adhesive. The polyether salt complex contributes at least about 10%, preferably 30 to 60%, more preferably about 40% to the total polyol content of the formulation. The concentration of the polyether complex will depend on the segmental motion of the particular polyether. In general, higher molecular weight polymers will have more segmental motion and will yield a more conductive complex; therefore, a lesser amount of the salt will be needed.

### Adhesive

While the salt-containing polyols described herein may be used in the preparation of any adhesive, it finds particular application in polyurethane reactive hot melt adhesives to be used for flooring or fabrics. Such adhesives containing residual ethylenic unsaturation or those urethane prepolymer compositions containing a thermoplastic polymer selected from the group consisting of an A-B-A block copolymer, and A-(B-A)ₙ-B block copolymer, and a radical A-B-A block copolymer wherein n is an integer from about 2-50, each A is a polystyrene block, and each B is a rubbery block. Typical adhesives of this class are described in U.S. Patent No. 4,820,368 to Markwa, et al., which is incorporated herein by reference as if set forth in full.

Thus, the first and preferred class of hot melts for use herein are prepared by the incorporation in the urethane prepolymer of a low molecular weight polymer. The low molecular weight polymer may be added to a polyol component prior to reaction with the isocyanate components or it may be added to the already formed prepolymer. Suitable adhesives may also be formed through the simultaneous polymerization of the urethane prepolymer and the ethylenically unsaturated monomers. The polyurethane prepolymer may also be polymerized in the ethylenically unsaturated monomers, which are then subsequently polymerized to form the adhesive. Alternatively, if a polyol is used to form the prepolymer, the ethylenically unsaturated monomers may be polymerized in the polyol using free radical polymerization procedures. In this case, the isocyanide components are subsequently polymerized with the mixture using conventional condensation polymerization procedures. This latter polymerization procedure has the advantage of excellent control of the molecular weight of the resulting vinyl polymer (as determined by intrinsic viscosity) and also produces a polymer which is free of detrimental impurities. In addition, the reduction in the handling and inventory of materials and elimination of intermediate packaging and storage bring about significant cost savings.

In the specific embodiment wherein an ethylenically unsaturated monomer containing moisture reactive functional groups is employed, the reactive nature of the crosslinking monomers requires that the monomer be added after the prepolymer has been formed. Thus, in this embodiment, the (co)polymer may be added in its polymerized form to the already formed prepolymer. Alternatively, and more preferably, the monomer or monomers are added to the already formed polyurethane prepolymer and polymerized therein using free radical polymerization procedures.

Any ethylenically unsaturated monomer capable of free radical polymerization and which does not contain active hydrogen may be used herein. Most commonly employed are the C₁ to C₁₂ esters of acrylic and methacrylic acids including but not limited to, methyl acrylate, ethyl acrylate, n-butyl acrylate, isobutyl acrylate, n-propyl or iso-propyl acrylate, as well as the corresponding methacrylates. Mixtures of compatible (methacrylate monomers may also be used. Such mixtures, including mixtures of butyl and methyl methacrylate, are well known in the art. Additional ethylenically unsaturated monomers such as vinyl ethers, fumarates, maleates, styrene, acrylonitrile. ethylene, vinyl ethers, etc., may be used, as may comonomers thereof.

When the ethylenically unsaturated monomer contains moisture reactive functional groups, any such monomer containing moisture reactive (curable) functional groups may be employed. In particular, monomers containing sane or reactive isocyanate functionality are particularly useful herein.

Typical of useful silane or isocyanate-containing ethylenically unsaturated copolymers are those which contain only mers derived from an ethylenically unsaturated monomer containing silane or isocyanate functional groups of those which contain up to 99% by weight of mers derived from a non-silane or non-isocyanate containing ethylenically unsaturated monomer capable of free radical polymerization. Thus, the final ethylenically unsaturated silane or isocyanate containing copolymer may contain 1 to 100% of the polymerized ethylenically unsaturated sane or isocyanate monomer, preferable up to 50% by weight and more preferably 5 to 30% by weight. Indeed, levels of ethylenically unsaturated silane or isocyanate containing monomers in the range of 15% or less have been shown to provide potentially commercially significant results.

The urethane prepolymers are those conventionally used in the production of polyurethane hot melt adhesives. Most commonly, the prepolymer is prepared by condensation polymerization of a polyisocyanate with a polyol, most preferably the polymerization of a diisocyanate with a diol. The polyols used include polyhydroxy ethers (substituted or unsubstituted polyalkylene ether glycols or polyhydroxy polyalkylene ethers), the ethylene or propylene ioxide adducts of polyols and the monosubstituted esters of glycerol.

In addition, some portion of the urethane prepolymers may be prepared by the reaction of a polyisocyanate with a polyamino-, polymercapto-, or polyhydroxy polyester-containing compound such as diamino polypropylene glycol or diamino polyethylene glycol or polythioethers such as the condensation products of thiodiglycol, either alone or in combination with other glycols such as ethylene glycol and 1,2-propylene glycol, or with other polyhydroxy compounds disclosed above. Also, small amounts of low molecular weight dihydroxy, diamino, or amino hydroxy compounds may be used, such as saturated and unsaturated glycols, including ethylene glycol and condensates thereof such as diethylene glycol, triethylene glycol, and the like; ethanolamine, propanolamine, N-methyldiethanolamine, and the like.

Any suitable organic polyisocyanate may be used, including ethylene diisocyanage, ethylidene diisocyanate, propylene diisocyanate, butylene diisocyanate, hexamethylene diisocyanate, toluene diisocyanate, cyclopentylene-1,3,-diisocyanate, cyclohexene-1,4-diisocyanate, cyclohesylene-1,2-diisocyanate, 4,4'-diphenylmethane diisocyanate, 2,2-diphenylpropane-4,4'-diisocyanate, p-phenylene diisocyanate, m-phenylene diisocyanate, xylylene diisocyanate, 1,4-naphthylene diisocyanate, 1,5-naphthylene diisocyanate, diphenyl-4,4'-diisocyanate, azobenzene-4,4'-diisocyanate, diphenylsulphone-4,4'-diisocyanate, dichlorohexamethylene diisocyanate, furfurylidene diisocyanate, 1-chlorobenzene-2,4-diisocyanate, 4,4',4''-triisocyanatotriphenylmethane, 1,3,5-triisocyanato-benzene, 2,4,6-triisocyanato-tolune, 4,4'-dimethyldiphenylmethane-2,2',5,5-tetraisocyanate, and the like.

The polyisocyanate and the hydroxyl mercapto, amine containing components are combined in proportions so as to yield an isocyanate terminated urethane prepolymer characterized by an isocyanate content of from about 0.25 to about 15%, preferably to about 10%, and most preferably from 1.0 to 5%. In addition, the ratio of isocyanate equivalents to hydroxyl, amino or mercapto equivalents (known as the isocyanate index) should be greater than 1 but no more than about 2. By maintaining the low isocyanate index, we are able to reduce the level of free isocyanate content in the final hot melt adhesive composition to less than about 4%, preferably less than 1%. It will be recognized that the presence of higher levels of free isocyanate has a detrimental effect on a hot melt formulation since it causes toxic fumes to be released when the adhesive is heated to application temperature. The higher levels of free isocyanate may also cause reduction in viscosity and poorer initial bond strength of the adhesive. The precise amount of the polyisocyanate used in the polymerization will depend on the equivalent weight and amount of the non-isocyanate components, and the particular polyisocyanate employed. In general, the amount of the polyisocyanate needed to achieve the isocyanate content will vary from about 5 to about 55% of the final prepolymer.

In the broadest sense, the ethylenically unsaturated monomer may be polymerized using conventional free radical polymerization procedures to a relatively low molecular weight. For purposes of clarification herein, by "low molecular weight" we mean weight average molecular weights in the range of approximately 10,000 to 30,000. The low molecular weight is obtained by careful monitoring and control of the reaction conditions and, generally, by carrying out the reaction in the presence of a chain transfer agent such as dodecyl mercaptan. There is a recognized correlation between intrinsic viscosity and molecular weight and we have found that, in general, monomers polymerized to an intrinsic viscosity of 0.1 to 0.4 (I.V. as measured in a 9:1 mixture of tetrahydrofuran and alcohol) are particularly preferred for use herein. In this embodiment, the low molecular weight polymer is then blended either with the polyol and dissolved therein prior to reaction with the isocyanate component or the low molecular weight polymer is dissolved in the already formed urethane prepolymer. In the case of polyamino or polymercapto containing prepolymers, in situ vinylic polymerization must be performed only in the pre-formed prepolymer. In either case, low molecular weight polymer is combined with the isocyanate terminated urethane prepolymer in a proportion such that polyisocyanate needed to achieve the isocyanate content will vary from about 5 to about 55% of the final prepolymer.

In the broadest sense, the ethylenically unsaturated monomer may be polymerized using conventional free radical polymerization procedures to a relatively low molecular weight. For purposes of clarification herein, by "low molecular weight" we mean weight average molecular weights in the range of approximately 10,000 to 30,000. The low molecular weight is obtained by careful monitoring and control of the reaction conditions and, generally, by carrying out the reaction in the presence of a chain transfer agent such as dodecyl mercaptan. There is a recognized correlation between intrinsic viscosity and molecular weight and we have found that, in general, monomers polymerized to an intrinsic viscosity of 0.1 to 0.4 (I.V. as measured in a 9:1 mixture of tetrahydrofuran and alcohol) are particularly preferred for use herein. In this embodiment, the low molecular weight polymer is then blended either with the polyol and dissolved therein prior to reaction with the isocyanate component or the low molecular weight polymer is dissolved in the already formed urethane prepolymer. In the case of polyamino or polymercapto containing prepolymers, in situ vinylic polymerization must be performed only in the pre-formed prepolymer. In either case, low molecular weight polymer is combined with the isocyanate terminated urethane prepolymer in a proportion such that the reactive curing hot melt adhesive contains about 5 to 90% of the urethane prepolymer and 95 to 15% of the low molecular weight polymer. Care should be taken in storing and handling the low molecular weight polymer to avoid contamination with ambient moisture or other factors which might affect the stability of the prepolymer system.

In accordance with an alternative method for preparing the urethane prepolymers, where the ethylenically unsaturated monomers do not contain reactive functional groups, and wherein a polyol is employed, the monomers are combined in an amount of about 2 to 90% by weight with 10 to 98% by weight of the polyol and polymerized therein using conventional free radical polymerization procedures in the presence of a chain transfer agent such as dodecyl mercaptan to achieve the low molecular weight polymer dissolved in the polyol. Subsequent to the polymerization of the ethylenically unsaturated monomer(s), the polyisocyanate and any additional ingredients required for the urethane prepolymer forming reaction are added and that reaction is carried out using conventional condensation polymerization techniques. In this manner the resultant isocyanate terminated urethane prepolymer forms the reactive curing hot melt adhesive described above which contains about 5 to 90% of the urethane prepolymer and 95 to 10% of the low molecular weight polymer.

It is also possible in the case of monomers which do not contain isocynanate reactive function groups to polymerize the low molecular weight polymer in the presence of the already formed isocyanate terminated urethane prepolymer. This method has the drawback of subjecting the prepolymer of unnecessary heating during the acrylic polymerization, heating that might result in branching, viscosity increase, depletion of needed isocyanate groups and possible gellation. Although these disadvantages are subject to control, more stringent control of conditions are required as compared to polymerization in the non-isocyanate functional urethane components. When the reaction is run in the polyol or other non-isocyanate containing component, there is also the advantage of lower reaction viscosities and reduced exposure to isocyanate vapors because of the lesser amount of heating required.

The second class of reactive urethane adhesives used herein are those prepared by the incorporation in the urethane prepolymer of about 1 to 200 parts by weight per each 100 parts of the prepolymer of a thermoplastic polymer selected from the group consisting of an A-B-A block copolymer, an A-(B-A)ₙ-B block copolymer, and a radical A-B-A block copolymer wherein n is an integer from about 2 to 50, each A is a polystyrene block, and each B is a rubber block.

While the adhesives may be used directly as described above, they may also be formulated with conventional additives such as plasticizers, compatible tackifiers, anti-oxidants, pigments, stabilizers, catalysts, surfactants, adhesion promoters, and the like.

The resulting hot melt adhesive compositions, as described herein above, are typically applied at temperatures of from about 100°C and a corresponding melt viscosity at about 120°C of from about 2,000 to 60,000 mPas. The compositions can be coated onto a textile in any manner known to the art such as roller, slot or spray coating, for example, to bond an outer layer of fabric to a polyester scrim or polyurethane foam. The resulting multilayer fabric can be used as a static dissipative floor covering or upholstery material, as the adhesive provides a leakage path for a static charge. Similarly, for lamination of floor panels, the adhesive is applied to one surface and the bond made under pressure. Some applications can be made by forming the bond after the open time has been exceeded by using heat reactivation, such as by use of IR lamps or hot press methods.

The following examples are presented for the purpose of illustrating the practice of the present invention. They do not limit the invention, or the claims which follow.

### EXAMPLES

The following examples illustrate the preparation of a static dissipative materials for use herein.

### EXAMPLE 1

### Formation of the Salt Complex

A salt complex is made by stirring various ratios of the anhydrous salt into the degassed polyether polyol, and heating to about 80 to 120°C.

| **Polyol** | **Salt** | **polyol:salt ratio** | **Tg Midpoint** °**C** | **Viscosity, Cps** |
|---|---|---|---|---|
| P2000 | -- | -- | -72.9 | 350 |
| P2000 | LiClO₄ | 50:1 | -67.5 | c 1,000 |
| P2000 | LiCF₃SO₃ | 50:1 | -67.8 | 900 |
| P2000 | LiClO₄ | 75:1 | -68.9 | NM |
| P2000 | NaClO₄ | 50:1 | -68.2 | 1,200 |
| EP1900 | -- | -- | -70° | 900 |
| EP1900 | LiClO₄ | 75:1 | -69.1 | 2,725 |
| EP1900 | LiClO₄ | 15:1 | -54.3 | 72,000 |

| | | | | |
|---|---|---|---|---|
| * By inspection. Literature Tg for polyethylene oxide is -67°C, for polypropylene oxide is -75°C. | | | | |

Concentration in these complexes is usually measured by the mole ratio of ether units to a single metal ion. Complexes with a mole ratio of 3:1 have been made with the methods and materials given above. Representative complexes are shown in the table above. P2000 is polyethylene oxide, 2000MW. EP1900 is polyethylene oxide polypropylene oxide block copolymer, 3800 MW.

The salt complex is then used in place of part or all of the polyether polyol in a formulation for a reactive hot melt adhesive.

| **Ingredient** | **Wt. (gm)** |
|---|---|
| **1. Polypropylene glycol (1,000 MW)** | **275.8** |
| **2. 1,6-hexane diol, neopentyl glycol adipate (3,000 MW)** | **88.9** |
| **3. 1,6-hexane diol, neopentyl glycol adipate (1,000 MW)** | **29.3** |
| **4. Butyl methacrylate** | **17.8** |
| **5. Butyl methacrylate** | **94.1** |
| **6. Methyl methacrylate** | **9.4** |
| **7. Methyl methacrylate** | **53.6** |
| **8. Dodecyl mercaptan** | **0.6** |
| **9. Bezoyl peroxide** | **1.7** |
| **10. Benzoyl peroxide** | **0.6** |
| **11. Methylene bis phenyl diisocyanate** | **131.1** |

The reaction vessel was purged with dry nitrogen and a slow stream of dry nitrogen was bubbled subsurface throughout the reaction. Ingredients designated 1, 2, 3, 4, 6, 8 and 9 were added to the vessel and the temperature raised to 80°C. After one-half hour at 80°C, ingredients 5 and 7 were added uniformly over a period of 1 hour. The reaction was held at 80°C for an additional 3 hours, at which time ingredient 10 was added. The reaction was held an additional 2 hours at 80°C and ingredient 11 was added; then the temperature was raised to 100°C and held for 3 hours. At this point, a vacuum of 120 mm to 130 mm was applied to the vessel for 20 minutes to 30 minutes and the reaction poured hot from the flask. The samples had the following properties.

| **Properties** | |
|---|---|
| % Methacrylate polymer | 25% |
| Ratio of butyl methacrylate to methyl methacrylate | 64 to 36 |
| % Urethane prepolymer | 75% |
| % Isocyanate Groups | 1.9% |
| Viscosity at 100°C | 64,000 cps |
| Viscosity at 120°C | 25,250 cps |
| Viscosity at room temperature | Solid |
| Intrinsic viscosity in THF/ETOH | 0.18 |
| Color | water white to very slightly amber |
| Clarity | clear to very slightly hazy |
| Calculated urethane prepolymer mol. wt. | 3315 mol. wt. |
| Isocyanate Index | 1.6 |

### EXAMPLE 2

### Static Dissipative Adhesive

Variations on the following formulation were used to make adhesives useful as a contact cement. About 42.82 weight percent P2000, a polypropylene oxide polyol, was degassed and blended with various amounts of anhydrous salt. The resulting salt complex was then blended with 18.36 weight percent polyester resin and 24.95 weight percent acrylic resin as described above in Example 1, except that about 0.2 weight percent Modaflow surfactant (available from Monsanto Corp., St. Louis, MO) was added initially and about 0.5 weight percent Silane A-189 adhesion promoter (available from Union Carbide Corp.), were added after the MDI reaction and reacted for about 1 hour at 100°C. The results are summarized in the following table. The resistance measurements were made through a fully cured film of the adhesive at a thickness corresponding to about 200 gsm.

| **Polyol:salt ratio** | **Salt** | **Resistance (ohm)** | **Tg (midpoint)** | **Modulus MN/m**^{**2**} |
|---|---|---|---|---|
| -- | no salt | > 10⁹ | -50.0°C | 39 |
| 50:1 | LiClO₄ | 4.79 x 10⁶ | -45.3°C | 41 |
| 50:1 | LiClO₄ | 1.05 x 10⁷ | -44.3°C | 64 |
| 75:1 | LiClO₄ | 6.92 x 10⁶ | -48.0°C | 47 |
| 50:1 | NaClO₄ | 8.0 x 10⁶ | * | 39 |

| | | | | |
|---|---|---|---|---|
| * This sample was about one week old at the time, and may not have been fully cured. If so, the resistance would be expected to be lower than indicated. | | | | |

These results show that the product without the salt complex has a resistance too high to allow it to quality as static dissipative (>10⁹), but that the formulations using the complex formed with both LiClO₄ and NaClO₄ had resistances in the static dissipative range. Tg (midpoint) was substantially unchanged. The modulus changed only slightly to yield a slightly tougher film. In sum, there were no substantial negative changes to adhesive performance. The NaClO₄ sample may not have been fully cured, and this would be the reason the Tg was not measured. If so, then the actual resistance of the cured film would be expected to be lower, that is, more to the center of the static dissipative range.

### EXAMPLE 3

### Cured Film Stiffness Related to Resistance

A single component 100% solids polyurethane was made by blending EP 1900 with LiClO₄ to make a complex with a 75:1 monomer:salt ratio. About 100 weight parts of this complex was then blended with varying amounts of MDI and heated 3 hours at 70°C. The amount of MDI is related to the cured film stiffness and its electrical resistance.

| **Blend** | **Tg (°C)** | **Resistance (ohm)** | **Film Description** |
|---|---|---|---|
| 58 complex: 30 MDI | -69 | ∼4 x 10⁹ | Very rigid |
| 58 complex: 15 MDI | -69 | 7.1 x 10⁷ | Stiff, but deformable |
| 58 complex: 5 MDI | -68 | 2 x 10⁶ | Readily deformable |

### EXAMPLE 4

### Poly Tetrahydrofuran (Poly-THF)

Lithium perchlorate (2 parts) was dissolved in poly-THF (98 parts) (M.W. 4500) by stirring at 120°C under vacuum for 2.5 hours. The poly-THF originally had a viscosity of 925 mPas, and the mixture had a viscosity of 1174 mPas (Brookfield Thermosel, Spindle 27, Speed 20 rpm. Temperature 120°C).

| Adhesive Formulation (grams | |
|---|---|
| Poly-THF/Lithium Perchlorate Complex | 70.2 |
| Dynacoll 7360 (Hüls) | 20.7 |
| 4,4-MDI | 9.0 |
| Dimorpholinoinodiethylether | 0.1 |

About 70.2 grams of poly-THF/lithium perchlorate complex was stirred with Cynacoll 7360, available from Hüls, under vacuum at 120°C for about an hour. The reaction mixture was cooled to about 100°C, and about 9 grams of 4,4-methylene diisocyanate (MDI) was added. The mixture was allowed to react for 1 hour in the temperature range of 110 to 120°C for one hour, and then about 0.1 grams of dimorpholinoinodiethylether, a moisture curing catalyst available as DMDEE from Texaco was added.

The product had a high viscosity and poor thermal stability. A film was made by hot coating onto release paper. The film had very high cohesive tack at room temperature. Alter curing by atmospheric moisture, the film was tack free and highly elastic. Resistance was measured at 500v after 72 hours ambient cure and again after heating for 1 hour at 120°C.

| | Thickness (mm) | Resistance |
|---|---|---|
| (Megohms) | | |
| 72 hours ambient cure | 0.20-0,23 | 0.05-0.10 |
| further 1 hr at 120°C | 0.27-0.29 | 0.40-0.45 |

### EXAMPLE 5

### High MW Polypropylene Oxide

About 6.7 parts lithium perchlorate were dissolved in 93.3 parts of Aclaim DPP 12,200 (polypropylene oxide, molecular weight 12,200, available from Arco under the same conditions as Example 4 to yield a DPP/lithium perchlorate complex.

| Adhesive Formulation (grams) | |
|---|---|
| Complex | 39.0 |
| Evalcite 2013 | 26.0 |
| Dynacoll 7360 | 26.0 |
| Modaflow | 0.1 |
| 4,4' MDI | 6.1 |

About 26 grams of Evalcite 2013, was dissolved in about 39 grams of the complex. About 26 grams of the Dynacoll 7360 was added and the mixture stirred at 120°C under vacuum. The reaction with MDI was carried out as in Example 4.

A film was made as in Example 4, and cured to a tough elastomer after 3 days at ambient temperature and humidity. Resistance was measured at 500v.

| | | |
|---|---|---|
| | Thickenss (mm) | Resistance |

| (Megohms) | | |
|---|---|---|
| after 72 hours cure | 0.20-0.30 | 0.15-0.25 |
| 1 hr at 120°C | 0.12-0.14 | 1.40-1.50 |
| 6 hrs at 120°C | 0.14-0.20 | 1.78-1.80 |
| 24 hrs at 120°C | 0.18-0.21 | approx. 6 |

Adhesives made without the lithium perchlorate were non-conductive, the results in Experiments 4 and 5 show that a tack-free film can be obtained upon moisture cure, and that thoroughly dry films that retain conductivity in the dissipative range can be formulated.

## Claims

1. A static dissipative material for bonding flexible multilayer structures, the material comprising a hot melt adhesive prepared by complexing a highly ionic metal cation with a polyether polyol in a mole ratio of 1:15 to 1:75, then reacting the complex with one or more isocyanates.

2. The material of Claim 1 wherein the metal cation is selected from a group consisting of sodium, lithium and calcium.

3. The material of Claim 1 wherein the metal cation is derived from sodium perchlorate or lithium perchlorate.

4. The material of Claim 1 wherein the polyether polyol is selected from the group consisting of polyethylene oxide polyols, polypropylene oxide polyols, poly-tetrahydrofuran, and copolymers of these with or without other monomers.

5. The material of Claim 4 wherein the polyether polyol is polypropylene oxide having a molecular weight of about 2000.

6. The material of Claim 4 wherein the polyether polyol is polypropylene oxide/polypropylene oxide having a molecular weight of about 3800.

7. The material of Claim 1 wherein the polyether:metal cation mole ratio is 30:1 to 60:1.

8. The material of Claim 1 wherein the polyether:metal cation mole ratio is 40:1 to 55:1.

9. The material of Claim 1 further comprising one or more polyhydroxy polyesters.

10. The material of Claim 1 further comprising one or more acrylate reactive monomer or oligomers.

11. The material of Claim 1 further comprising a suitably nonreactive acrylic polymer which can be dissolved in the hot melt adhesive.

12. A static dissipative fabric comprising one or more substantially continuous layers, said fabric comprising a crosslinked hot melt adhesive comprising a highly ionic metal cation complexed in a mole ratio of 1:15 to 1:75 with the reaction product of a polyether polyol.

13. An improved method of making a polyurethane reactive hot met adhesive, the improvement comprising incorporating a complex made of a highly ionic metal cation and a polyether polyol in a mole ratio of 1:15 to 1:75 in the formulation for the adhesive.

14. The method of Claim 14 wherein the complex is made by blending a salt selected from the group consisting of mono- and divalent metal salts with the polyether polyol at a temperature of about 80-120°C whereby the metal salt dissolves into the polyether polyol.

15. The method of Claim 14 wherein the metal salt is sodium perchlorate or lithium perchlorate.
